# EUROPEAN PATENT APPLICATION

(11) **EP 2 067 600 A2**
(43) Date of publication of application: **10.06.2009**
(21) Application number: 08170688.9
(22) Date of filing: 04.12.2008
(51) Int. Cl.: B29C 53/56, B29C 65/16, B29D 23/00

(54) **Method and apparatus for manufacturing a tubular product**

(30) Priority: 07.12.2007 GB 0723891
(71) Applicant: Lamina Dielectrics Limited, Billingshurst Sussex RH14 9SJ (GB)
(72) Inventor: Clayton, Patrick, Worthing Sussex BN11 5HT (GB); Heston, Patrick, Pulborough Sussex RH20 1JT (GB)
(74) Representative: Johnstone, Douglas Ian

(57) **Abstract**

A method of manufacturing a tubular product comprising the steps of:
i) arranging a laser absorbent component at a first side of a subject material which is non-laser absorbent,
ii) forming the subject material into a tubular shape in which a first portion overlies a second portion and the absorbent component is arranged therebetween, and
iii) directing laser light adapted to be absorbed by the laser absorbent component through the first portion and at the laser absorbent component, such that a weld is formed which results in said first portion and said second portion being affixed together.
And an apparatus for performing the least steps ii) and iii) of said method.

## Description

This invention relates to a method and apparatus for manufacturing a tubular product, for use particularly, but not exclusively, to produce electrical insulation tubing.

Electrical insulation tubing is generally used to electrically insulate joints in wires, such as those found within the windings in electrical motors. Such tubing is constructed from multiple thin layers of electrically insulating material such as polyester. These products take a variety of forms, and are manufactured using many different methods.

One type of tube is manufactured from several narrow strips of an electrically insulating polymer, which are each coated with adhesive and applied to a cylindrical mandrel at an oblique angle, so a continuous length of tube with helical joints is formed. The tube can be cut to length later.

Another type of tube is produced by rolling a short length of electrically insulating polymer onto a cylindrical mandrel at a perpendicular angle thereto, such that a tube with a spiral cross-section is formed, which is already of the desired length. Tubes like this are prevented from unwinding by attaching the layers to each other with ultrasonic welding or an adhesive, or by permanently deforming the material by heating it. Such a construction of tubing is shown in JP2000067674A.

The adhesives used to construct the types of tubing described above are detrimental to the environment, and add cost to the manufacturing process. Where welding or deformation are used as a means to attach one layer of material to another, the welding or deformation is applied to the entire thickness of the tube wall, which is detrimental to the insulating properties. In addition, such methods are not particularly reliable.

A new type of material welding has now been invented, known as through transmission laser welding. In one particular arrangement a laser absorber material is positioned between two non laser absorbing materials, and a laser is applied to the absorber such that it melts and forms a weld between the two non laser absorbing materials. This type of material welding is relatively new, and an example of an invention which utilizes this technology is shown in EP1785260.

The present invention is intended to overcome some of the above problems.

Therefore, according to a first aspect of the present invention a method of manufacturing a tubular product comprises the steps of: i) arranging a laser absorbent component at a first side of a subject material which is non-laser absorbent, ii) forming the subject material into a tubular shape in which a first portion overlies a second portion and the laser absorbent component is arranged therebetween, and iii) directing laser light adapted to be absorbed by the laser absorbent component through the first portion and at the laser absorbent component, such that a weld is formed which results in said first portion and said second portion being affixed together.

Thus, the present invention involves the formation of a subject material into a tubular product without any damage being caused to the subject material itself, at or around the weld point, since the weld depth is only a few microns into the two surfaces to be joined.

Step i) can involve a laser absorbent component being formed as an integral part of the subject material during formation thereof. Such a construction is known in the field of through transmission laser welding in general. However, whilst it is a possibility in the present case, it is not ideal because the invention is preferably used to form a tubular product from known reels of polymeric tape, which are readily available.

Therefore, in a preferred construction in step i) the laser absorbent component can be applied to the first side of the subject material by an application device. This device can be in the form of a felt tip applicator, a hypodermic needle applicator or anything similar which can apply the laser absorbent component to the subject material immediately prior to, or during, the second step. Alternatively the application device can be a pre-printing or coating application device which can apply the laser absorbent component to the subject material some time before the second step is commenced.

The laser absorbent component can be applied to the second portion and/or the first portion prior to the first portion being arranged over the second portion in step ii). How the application device functions and is orientated in use may determine which of these options is chosen.

In one version of the invention in step i) the laser absorbent component can be arranged intermittently at the first side of the subject material, such that in step iii) a series of welds are formed. Such an arrangement can be used to save on raw materials, if the end product can function adequately as such. However, as an alternative to this, in step i) the laser absorbent component can be arranged continuously at the first side of the subject material, such that in step iii) a single continuous weld is formed.

In step ii) in one method of the invention the first portion can be arranged over the second portion along a line which is parallel to an axis of the tubular shape. As such the method will produce a simple tubular product with a straight weld along one side. However, in step ii) of an alternative method the first portion can be arranged over the second portion along a line which is helically arranged around an axis of the tubular shape. In this method the end product has a helical weld, which may be appropriate for certain applications, in particular those where a loading may be applied.

Preferably in step ii) the subject material can be drawn through a formation aperture or series of apertures to form it into a tubular shape. If the end product is to have a straight weld along one side, the subject material can be applied to this formation aperture or series of apertures at an angle which is in line with a longitudinal axis thereof. Alternatively, if the end product is to have a helically shaped weld, the subject material can be applied to the formation aperture or series of apertures at an oblique angle to a longitudinal axis thereof.

In a preferred method in step ii) the subject material can be formed into a tubular shape in which the second portion overlies at least one other portion. As such, the method produces an end product in which the subject material is rolled on itself a number of times, and benefits from superior strength.

In step iii) of one method the subject material can be drawn through a circular aperture or series of apertures, and the laser light can be applied to the laser absorbent component while the subject material is in the circular aperture or series of apertures. As such the subject material is held in position during the welding process.

The method of the invention can also comprises the further following steps: iv) applying a post welding compressive force to the subject material for sufficient time to allow the formed weld to set, and/or v) applying a post welding cooling to the subject material for sufficient time to allow the formed weld to set.

It will be appreciated that novel apparatus is required to perform the above method of manufacture. Therefore, according to a second aspect of the present invention, apparatus is provided for performing at least steps ii) and iii) of the method of manufacturing a tubular product as claimed in Claim 1 below, in which the apparatus comprises a tube forming means, a tube maintaining means, a laser, and drawing means, in which the tube forming means comprises a formation aperture or series of apertures adapted to form a subject material into a tubular shape, in which the tube maintaining means comprises a circular aperture or series of apertures and a laser application aperture arranged at an angle to said circular aperture or series of apertures, in which the laser is adapted to project a laser beam through the laser application aperture onto the subject material, and in which the drawing means is adapted to draw the subject material through the tube forming means and the tube maintaining means.

The apparatus can further comprise laser absorbent component application means adapted to apply a laser absorbent component to the second portion and/or the first portion prior to the first portion being arranged over the second portion in step ii).

In a preferred construction the tube maintaining means can comprise a block provided with a circular aperture therethrough. The circular aperture can comprise a secondary section beyond the laser application aperture which is adapted to provide a post welding compression force and/or a post welding cooling to the subject material for sufficient time to allow for the formed weld to set.

The invention also includes the end product referred to above. Therefore, accordingto a third aspect of the present invention a tubular product is provided with is manufactured using the method of manufacture as claimed in any of Claims 1 to 14 below.

The invention can be performed in various ways, but two embodiments will now be described by way of example and with reference to the accompanying drawings, in which:
Figure 1 is a perspective view of apparatus for performing a method of manufacturing a tubular product according to the second aspect of the present invention;
Figure 2 is a perspective view of components of the apparatus as shown in Figure 1;
Figure 3 is a cross-sectional side view of a component of the apparatus as shown in Figure 1;
Figure 4 is a cross-sectional end view of a tubular product manufactured using a method of manufacturing a tubular product according to the third aspect of the present invention;
Figure 5 is an enlarged cross-sectional end view of a portion of the tubular product shown in Figure 4;
Figure 6 is a perspective view of an alternative component to that shown in Figure 2;
Figure 7 is a perspective view of the component shown in Figure 6; and
Figure 8 is a perspective view of an alternative apparatus for performing a method of manufacturing a tubular product.

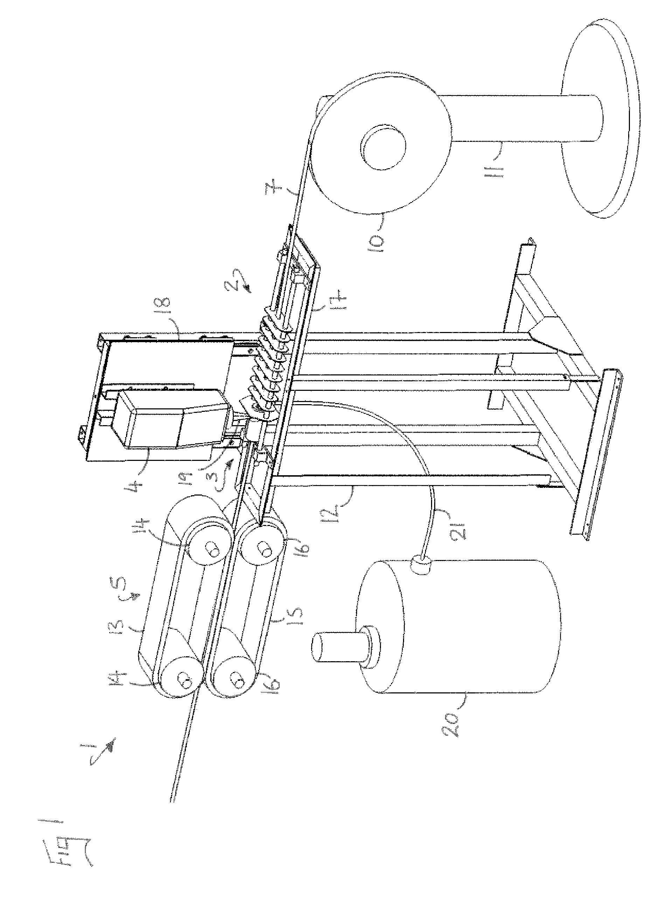

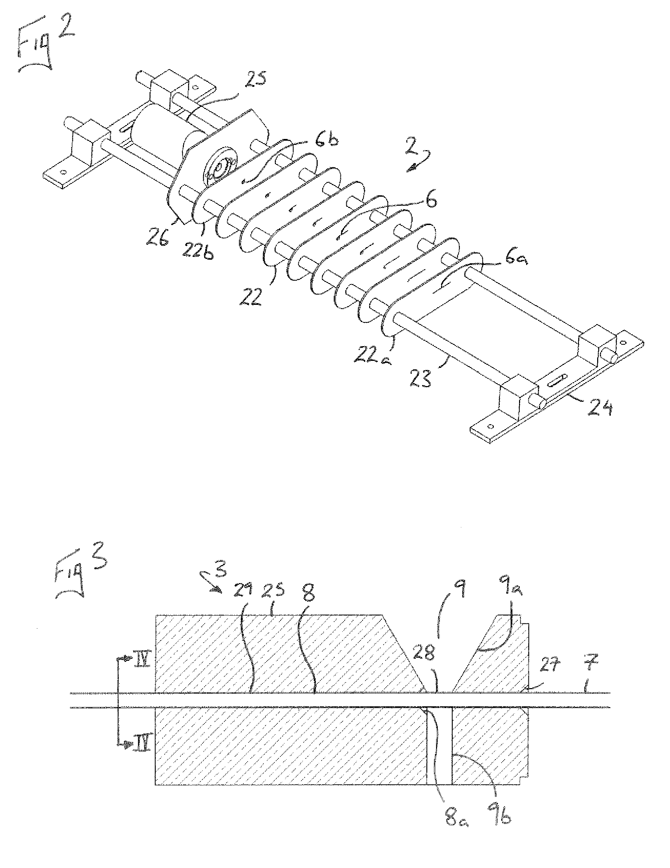

Therefore, as shown in Figure 1, apparatus according to the second aspect of the present invention 1, which is for performing a method of manufacturing a tubular product according to the first aspect of the present invention, comprises tube forming means 2, a tube maintaining means 3, a laser 4 and drawing means 5. Referring to Figure 2, which shows the tube forming means 2 in more detail, it comprises a series of apertures 6 adapted to form a subject material 7 into a tubular shape. Referringto Figure 3, which shows the tube maintaining means 3 in more detail, it comprises a circular aperture 8 and a laser application aperture 9 arranged at an angle to said circular aperture 8. Referring back to Figure 1, the laser 4 is adapted to project a laser beam 19 through the laser application aperture 9 onto the subject material 7. The drawing means 5 is adapted to draw the subject material 7 through the tube forming means 2 and the tube maintaining means 3.

The apparatus 1 comprises a number of separate components which are arranged adjacent one another. The subject material 7 is a polymeric tape provided on a reel 10, which is mounted for rotation on a stand 11. The tube forming means 2, the tube maintaining means 3 and the laser 4 are mounted on a framework 12. The drawing means 5 comprises an upper track 13 mounted on a pair of upper rollers 14, and a lower track 15, mounted on a pair of lower rollers 16. The upper rollers 14 are driven in a clockwise direction by associated machinery (not shown), which supports them in the position shown. The lower rollers 16 are driven in an anticlockwise direction by said machinery. The stand 11 and the drawing means 5 are known.

The tube forming means 2, the tube maintaining means 3 and the drawing means 5 are arranged on a production axis, so the subject material is drawn through these components in a straight line. As the reel 10 changes in size during use, the subject material 7 may not leave the reel 10 precisely aligned with the production axis, as it may be above or below it. However, reel 10 is arranged in a plane which is parallel with the production axis so the subject material 7 is always in line with the production axis. From the drawing means 5 the manufactured tubular product is directed to cutting and packaging machinery (not shown).

The framework 12 comprises a lateral section 17 which supports the tube forming means 2 and the tube maintaining means 3, such that the apertures 6 and the circular aperture 8 are arranged along said production axis. The framework 12 further comprises a laser mounting plate 18 which supports the laser 4 above the tube maintaining means 3, such that a laser beam 19 which the laser 4 produces is normal to the production axis, and is directed through the laser application aperture 9.

The apparatus 1 further comprises laser absorbent component application means, only a few components of which are visible in Figure 1. The application means comprises a fabric applicator which is saturated with the laser absorbent component. The applicator is kept stocked with a supply of the laser absorbent component by a small pump, which is supplied from a drum 20 by line 21. The fabric applicator is similar to the tip of a felt-tip pen, and it effectively "draws" a line of the laser absorbent component onto the subject material 7 immediately prior to its entry into the tube maintaining means 3.

The laser absorbent component which is one of many commercially available dyes which are suitable for welding with a laser wavelength of 940 nm. The laser 4 is a ROFIN DL018 diode laser, which has a laser wavelength of 940 nm +/- 10 nm, operating at about 200w. The drawing means 5 operates to draw the subject material past the laser beam 19 at a speed of substantially five metres per minute, which is sufficient for the through transmission laser welding to operate effectively. (It will be appreciated that the type of dye and the laser which are used can be any known type, provided the wavelength of the laser is appropriate for use with the dye and visa versa. In addition, the speed the drawing means operates can be adjusted if required to suit a particular dye and laser configuration.)

Referring to Figure 2, the tube forming means 2 comprises a series of nine aperture plates 22, which are mounted on a pair of parallel mounting bars 23. The mounting bars 23 are supported at their ends by blocks plates 24, which are fixed to the framework 12. Each of the aperture plates 22 has an aperture 6, and the apertures 6 progress from a flat aperture 6a in the first aperture plate 22a, to a mostly circular aperture 6b in the final aperture plate 22b. Each of the apertures 6 after the first aperture 6a has a curved section at one end, and a flat section at the other. At first each progressive aperture 6 has a greater curved section and a lesser flat section than the last, until the curved section is circular. From that point onwards the flat section gets progressively smaller. As a result, when the subject material 7 is drawn through these apertures 6, it is turned from its flat shape into a rolled shape with a short flat section extending therefrom.

The tube maintaining means 3 comprises a block 25, which is mounted on plate 26, which is itself supported by the mounting bars 23. The block 25 has the circular aperture 8, and the laser application aperture 9 formed therein. The circular aperture 8 is aligned on the production axis with the aperture 6b, so the subject material 7 travels from the last aperture 6b directly into the circular aperture 8, and as it does so it is turned from a rolled shape with a short flat section extending therefrom, into a completely rolled shape. The circular aperture 8 has a chamfered first end 27 to prevent any undue resistance in use.

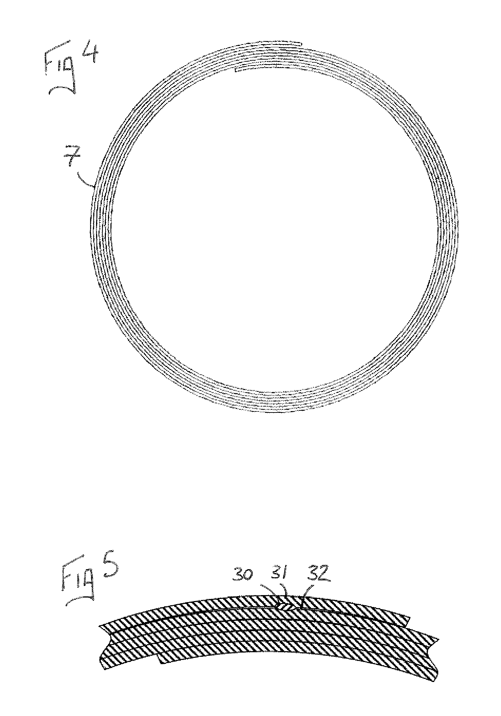

As such, the circular aperture 8 forms the final part of the tube forming process. The circular aperture 8 has a circumference which is slightly under a quarter the length of the flat aperture 6a, and as such the subject material 7 is rolled just over four times, as illustrated in Figure 4. When inside the circular aperture 8 the subject material 7 is maintained in its tubular configuration, as shown in Figure 3.

The laser application aperture 9 comprises a top part 9a which is tapered so it does not interfere with the laser beam 19, which is focussed on a point 28, where it meets the subject material 7 travelling through the circular aperture 8. The laser application aperture 9 also comprises a bottom part 9b below the point 28, such that energy from the laser beam 19 which passes through the subject material 7 also passes through the block 25 and does not heat it. The circular aperture 8 is chamfered at 8a where it continues after the laser application aperture 9, to prevent any undue resistance in use.

The circular aperture 8 comprises a secondary section 29 beyond the laser application aperture 9, which is adapted to provide a post welding compression force and a post welding cooling to the subject material 7 to allow for a weld 30 formed at the point 28 to set. The compression force is provided simply by virtue of maintaining the subject material 7 in its rolled shape inside the circular aperture 8. The cooling is provided by virtue of the generated heat being absorbed into the body of the block 25.

The above referred to fabric applicator (not shown in Figures 2 and 3) is arranged between the aperture plate 22b and the plate 26, and it applies a line of laser absorbent component onto the subject material immediately prior to its entry into the circular aperture 8. The laser absorbent component is applied to the side of the roll at a point where the final part of the subject material 7 which is still flat at that point, will overlie the roll when the subject material enters the circular aperture 8.

(The method of manufacturing a tubular product according to the first aspect of the present invention makes reference to a first portion of the subject material overlying a second portion, with the laser absorbent component arranged therebetween. It will be appreciated from the above description that in apparatus 1, the laser absorbent component is applied to the section portion, just before the first portion is arranged in an overlying position. Figure 5 illustrates this, and shows how the finished weld 30 is arranged between the first portion 31 and the second portion 32 over which it lies.)

In use the apparatus performs the method of manufacturing a tubular product according to the first aspect of the present invention. Therefore, at a first step i) the laser absorbent component is arranged at a first side of a subject material 7 which is non-laser absorbent. At a second step ii) the subject material 7 is formed into a tubular shape, as shown in Figure 4, in which a first portion 31 overlies a second portion 32 and the laser absorbent component is arranged therebetween. At a third step iii) laser light 19 adapted to be absorbed by the laser absorbent component is directed through the first portion 31 and at the laser absorbent component, such that a weld 30 is formed, which results in said first portion 31 and said second portion 32 being affixed together.

In order to perform this method, firstly the reel 10 is mounted on the stand 11, and the subject material 7 is drawn therefrom and threaded through the tube forming means 2, the tube retaining means 3, and the drawing means 5. The drawing means 5 and the laser 4 are then switched on, and the subject material 7 is drawn from the reel 10 automatically, at a speed of substantially five metres per minute.

When the subject material 7 passes through the apertures 6 and into circular aperture 8, it is urged into a roll, as illustrated in Figure 4. As the subject material 7 is rolled just over four times, the second portion 32 overlies two further portions at most points, and three under the weld 30, due to the extra overlap. With this construction the end product benefits from superior strength and electrical insulation properties at all points.

Just prior to this roll being completed, the laser absorbent component is applied to the side of the roll at a point where the final part of the subject material 7 which is still flat at that point, will overlie the roll when the subject material 7 enters the circular aperture 8. As such it is the second portion of the subject material which has the laser absorbent material applied in step i).

When the subject material 7 passes point 28 the laser beam 19 passes through the first portion 31 of the subject material 7, and is absorbed by the laser absorbing component, such that a weld 30 is formed. The weld 30 sets and cools as the subject material 7 passes through the secondary section 29 of the block 25. The end product then passes through the tracks 13 and 15, and is directed to cutting and packaging machinery (not shown).

The third aspect of the present invention defines a tubular product manufactured by the methods of manufacture described above, and the roll shown in Figure 4 provides support for this.

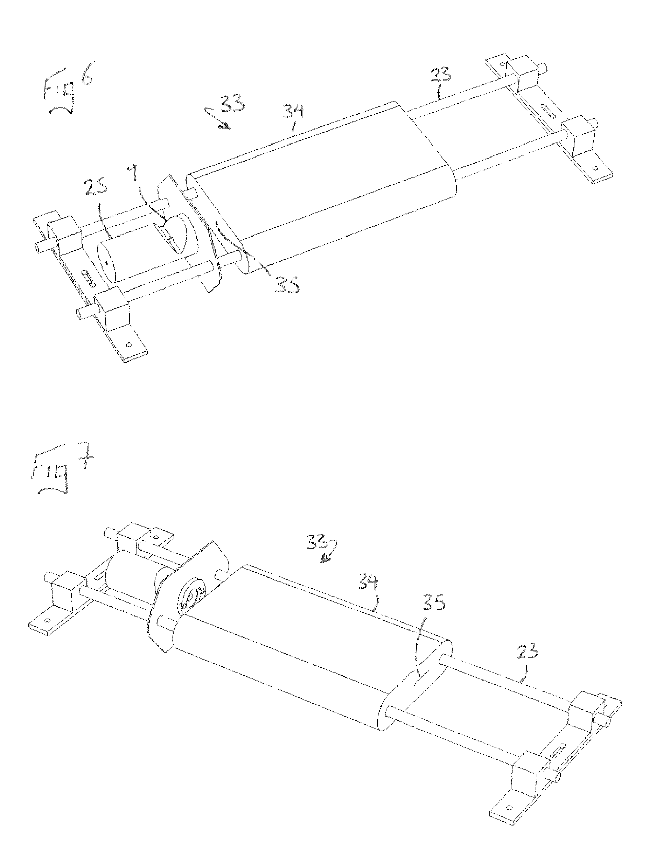

The construction and method described above can be altered without departingfrom the scope of the Claims. In particular, Figures 6 and 7 show an alternative tube forming means 33 which can replace the plates 22. It comprises a block 34, with a single shaped aperture 35 passing therethrough. The shaped aperture 35 comprises a circular section and a flat section, and as the aperture 35 passes through the block 34 the flat section decreases in size. The subject material 7 enters the aperture 35 in the flat section, and as it passes therethrough it is urged into a roll, in a similar way to that described above. (The aperture 35 has a circular section passing all the way through as this is easier to manufacture than an aperture which follows the exact shapes of the apertures 6 described above.) The block 34 is mountable on the same mounting bars 23 as the aperture plates 22 described above. (Figure 6 also provides a good view of the block 25, and in particular the laser application aperture 9.)

In the above described embodiments the reel 10 is arranged in a plane which is parallel with the production axis, and as the fabric applicator is continuously applied to the subject material 7, the weld 30 is a continuous straight line which runs down the side of the end product in parallel with its axis.

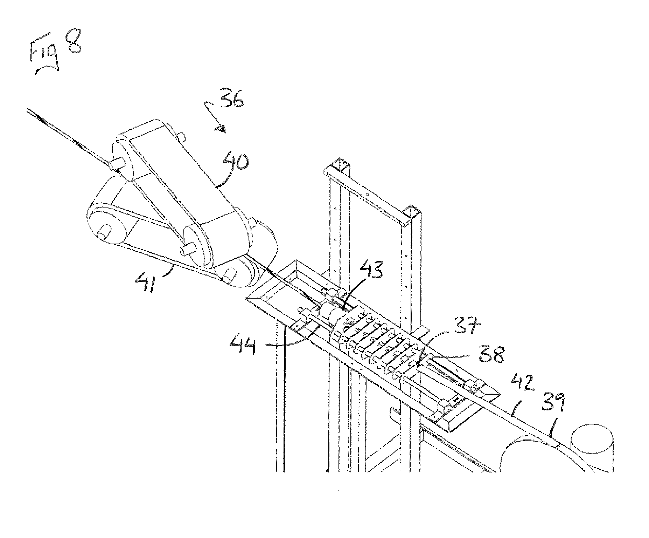

However in an alternative method to that described above, at step ii) the first portion can be arranged over the second portion along a line which is helically arranged around an axis of the tubular shape, such that the end product has a helical weld, which may be appropriate for certain applications, in particular those where a loading may be applied. Apparatus 36 for performing such a method is illustrated in Figure 8

Apparatus 36 comprises the same basic components as apparatus 1 described above, and in particular they are arranged in relation to the same production axis, however they are configured differently thereto. In particular, the apertures 37 in the aperture plates 38 are arranged along an oblique angle to the production axis, and the reel 39 is arranged in a plane which is aligned with said oblique angle. In addition, the upper and lower tracks 40 and 41 are offset in relation to the production axis, such that the end product is rotated on its own axis as it is drawn through the apparatus.

Therefore, the subject material 42 is rolled into a helical shape by the aperture plates 38, and it is rotated on its own axis as it is drawn through the block 43, such that the applied laser absorbent component passes the point where it absorbs the laser beam. The laser (not shown in Figure 8) and the block 43 are precisely positioned such that this occurs, and it will be appreciated that the block 43 can be moved on the support bars 44 if any adjustment is required.

In another alternative construction and method (not shown) no laser absorbent component application means are provided, and a laser absorbent component is formed as an integral part of the subject material during formation thereof at step i) of the method. The laser absorbent component is formed in the subject material at a point where the outermost part of the formed roll overlies an inner section, such that it is arranged much in the same place as the laser absorbent component applied by the apparatus 1 described above. As such, the application of the laser beam will result in a weld being formed much as described above. Subject materials with laser absorbent components formed therein are known in the field of through transmission laser welding in general.

In another alternative construction and method (not shown) the laser absorbent component application means is arranged such that the fabric applicator applies the laser absorbent component to the remaining flat section of the subject material immediately prior to its entry into the circular aperture in step i), such that the laser absorbent material is applied to the first portion of the subject material which overlies the second portion.

In another alternative construction and method (not shown) the laser absorbent component application means is arranged such that in step i) a first fabric applicator applies laser absorbent component to the side of the roll as in apparatus 1, but a second fabric applicator applies laser absorbent component to the remaining flat section of the subject material immediately prior to its entry into the circular aperture. As such the laser absorbent material is applied to both the first and the second portions of the subject material.

In the above described apparatus 1 and 36, the laser absorbent component is applied continuously to the subject material 7 as it is drawn through the apparatus 1. However, in an alternative construction (not shown) the laser absorbent component application means is arranged such that in step i) the laser absorbent component is applied intermittently to the first and/or the second portions of the subject material, such that in step iii) a series of welds are formed. This can be achieved by providing the fabric applicator with a timed reciprocal action, for example by mounting it on a turning cam.

Thus, a method and apparatus are provided which produce a robust and strong tubular product which does not suffer from deterioration or weakness at the point where it is bonded together.

## Claims

1. A method of manufacturing a tubular product comprising the steps of:
i) arranging a laser absorbent component at a first side of a subject material which is non-laser absorbent,
ii) forming the subject material into a tubular shape in which a first portion overlies a second portion and the absorbent component is arranged therebetween, and
iii) directing laser light adapted to be absorbed by the laser absorbent component through the first portion and at the laser absorbent component, such that a weld is formed which results in said first portion and said second portion being affixed together.

2. A method of manufacturing a tubular product as claimed in Claim 1 in which in step i) the laser absorbent component is formed as an integral part of the subject material during formation thereof.

3. A method of manufacturing a tubular product as claimed in Claim 1 in which in step i) the laser absorbent component is applied to the first side of the subject material by an application device.

4. A method of manufacturing a tubular product as claimed in Claim 3 in which in step i) the laser absorbent component is applied to the second portion and/or the first portion prior to the first portion being arranged over the second portion in step ii).

5. A method of manufacturing a tubular product as claimed in any of the preceding Claims in which in step i) the laser absorbent component is arranged intermittently at the first side of the subject material, such that in step iii) a series of welds are formed which result in said first portion and said second portion being affixed together.

6. A method of manufacturing a tubular product as claimed in any of Claims 1 to 4 in which in step i) the laser absorbent component is arranged continuously at the first side of the subject material, such that in step iii) a single continuous weld is formed which result in said first portion and said second portion being affixed together.

7. A method of manufacturing a tubular product as claimed in any of the preceding Claims in which in step ii) the first portion is arranged over the second portion along a line which is parallel to an axis of the tubular shape.

8. A method of manufacturing a tubular product as claimed in any of Claims 1 to 6 in which in step ii) the first portion is arranged over the second portion along a line which is helically arranged around an axis of the tubular shape.

9. A method of manufacturing a tubular product as claimed in Claim 7 or 8 in which in step ii) the subject material is drawn through a formation aperture or series of apertures to form it into a tubular shape.

10. A method of manufacturing a tubular product as claimed in any of the preceding Claims in which in step ii) the subject material is formed into a tubular shape in which the second portion overlies at least one other portion.

11. A method of manufacturing a tubular product as claimed in any of the preceding Claims in which in step iii) the subject material is drawn through a circular aperture or series of apertures, and in which the laser light is applied to the laser absorbent component while the subject material is in the circular aperture or series of apertures.

12. A method of manufacturing a tubular product as claimed in any of the preceding Claims in which the method comprises the further following steps:
iv) applying a post welding compressive force to the subject material for sufficient time to allow the formed weld to set,
and/or
v) applying a post welding cooling to the subject material for sufficient time to allow the formed weld to set.

13. A method of manufacturing a tubular product substantially as described herein.

14. Apparatus for performing at least steps ii) and iii) of the method of manufacturing a tubular product as claimed in Claim 1, in which the apparatus comprises a tube forming means, a tube maintaining means, a laser, and drawing means, in which the tube forming means comprises a formation aperture or series of apertures adapted to form a subject material into a tubular shape, in which the tube maintaining means comprises a circular aperture or series of apertures and a laser application aperture arranged at an angle to said circular aperture or series of apertures, in which the laser is adapted to project a laser beam through the laser application aperture onto the subject material, and in which the drawing means is adapted to draw the subject material through the tube forming means and the tube maintaining means.

15. Apparatus for performing a method of manufacturing a tubular product as claimed in Claim 14, in which the apparatus further comprises laser absorbent component application means adapted to apply a laser absorbent component to the second portion and/or the first portion prior to the first portion being arranged over the second portion in step ii) of the method.

16. Apparatus for performing a method of manufacturing a tubular product as claimed in Claim 14 or 15 in which the tube maintaining means comprises a block provided with a circular aperture therethrough, and in which the circular aperture comprises a secondary section beyond the laser application aperture which is adapted to provide a post welding compression force and/or a post welding cooling to the subject material for sufficient time to allow for the formed weld to set.

17. Apparatus for performing a method of manufacturing a tubular product substantially as described herein and as shown in the accompanying drawing.

18. A tubular product manufactured using the method of manufacture as claimed in any of Claims 1 to 14.
